# EUROPEAN PATENT SPECIFICATION

(11) **EP 1 715 427 B1**
(45) Date of publication and mention of the grant of the patent: **27.02.2008**
(21) Application number: 05008911.9
(22) Date of filing: 22.04.2005
(51) Int. Cl.: G06F 13/38

(54) **A system and a method for constructing and deconstructing data packets**
System und Verfahren zum Zusammenbau und Zerlegung von Datenpaketen
Système et procédé de construction et de déconstruction de paquets de données

(43) Date of publication of application: 25.10.2006
(73) Proprietor: Infineon Technologies AG, 81669 München (DE)
(72) Inventor: Lewis, Michael, 195 52 Märsta (SE)
(74) Representative: Patentanwälte Lambsdorff & Lange

(56) References cited:
- JAMIL KHATIB: "Bluetooth IP Core Specification" 26 September 2001 (2001-09-26), OPENCORES.ORG , XP002347066 Retrieved from the Internet: URL:http://custom.lab.unb.br/pub/hardware/ opencores/bluetooth_bb/doc/Bluetooth.pdf> [retrieved on 2005-09-28] * paragraph [02.5] *
- ATHANASSIOS BOULIS, MANI B. SRIVASTAVA: "System design of active basestations based on dynamically reconfigurable hardware" 2000, IEEE , ANNUAL ACM IEEE DESIGN AUTOMATION CONFERENCE , XP002347100 ISBN: 1-58113-187-9 Retrieved from the Internet: URL:http://portal.acm.org/citation.cfm?id= 337557> [retrieved on 2005-09-28] * figure 2 * * the whole document *

## Description

### Technical field of the invention.

The present invention relates in a first aspect to a system for constructing and deconstructing data packets.

In a second aspect the present invention relates to a method for constructing and deconstructing data packets.

In a third aspect the present invention relates to at least one computer program product for constructing and deconstructing data packets.

### Description of related art.

Many communications protocols are based on the transmission and reception of information coded into so-called 'packets'. Such packets consist of a number of defined fields, and the protocol defines the content of such fields for transmitting a particular item of data. An important part of communication equipment is therefore an apparatus for constructing and deconstructing such packets.

The JAMIL KHATIB: "Bluetooth IP Core Specification", Rev. 0.1d, 26 September 2001 discloses a data path for constructing and deconstructing data packets.

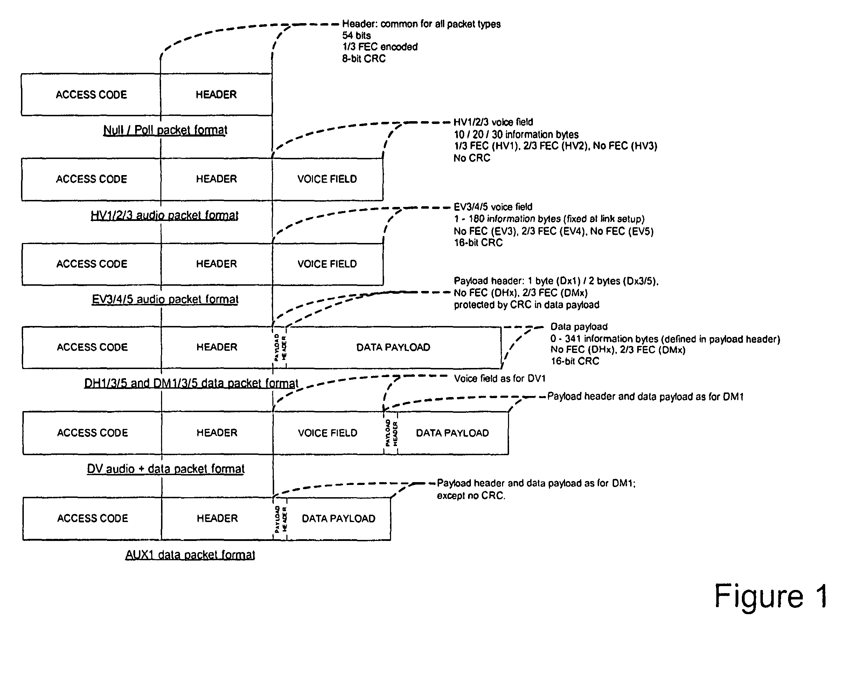

As an example, some of the different packet types for the Bluetooth^{®} standard are shown in Figure 1. All packets begin with an access code field which allows the receiver to discriminate the beginning of the transmission. This carries no other information content. All the shown packets also include a header field: amongst other things, this identifies the type of packet. This part of the packet is protected against transmission errors with a rate 1/3 error correcting code (FEC), and any remaining errors are detected by an 8-bit CRC check.

What follows next then depends on the type of packet: for packet types Null and Poll, there is no other information. For the other packet types, there are one or more subsequent information fields carrying different types of data.

Depending on packet type, these are encoded with different types of error correcting codes and may or may not contain a CRC field to check for errors. The length (number of bytes) of subsequent fields may be defined by the packet type (e.g. HVx packet types), may be pre-defined by some prior negotiation (e.g EVx packet types), or may be variable and defined by a further information field (e.g. the payload header for packet types with a data payload).

The apparatus for constructing and deconstructing such packets must therefore be capable of supporting a number of different coding formats. Particularly in the receive direction, there are often hard real time constraints and it is necessary to rapidly interpret the contents of one information field in order to re-configure the packet deconstruction apparatus to process the following sections. Due to the time constraints, and also due to the requirements for low power consumption for portable data communication systems such as Bluetooth^{®}, it is common to design a dedicated hardware packet processing datapath block for performing the bit-level operations.

Communication standards are always in a state of rapid evolution, and the pressure to achieve a fast time-to-market for updated versions of a standard require that a communications product be designed with flexibility in mind. Typically, this is achieved by having the key decision-making processes performed by software running on a general purpose microprocessor embedded in the communications product. An update to the standard (e.g. a new packet type) can then often be catered for by a pure software upgrade. This also provides the maximum protection against errors in design, since hardware errors in the packet processing datapath can often be corrected by intervention from the microprocessor via a work-around in the software.

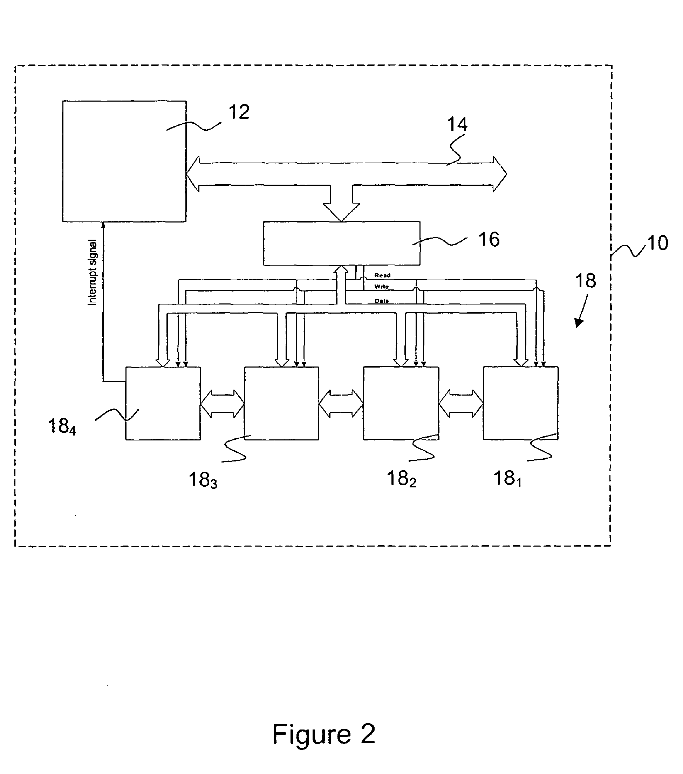

A simple example of such a system 10 is shown in Figure 2. This consists of a microprocessor 12 with its own bus system 14, 16 and a packet processing datapath 18 consisting of an RF interface 18₁ (which transfers data to and from the radio), a FEC block 18₂ (which performs error correction coding or decoding), a CRC block 18₃ (which generates or checks a CRC code) and a DMA endpoint 18₄ (which requests that information bytes be transferred to or from system memory via direct memory access, and issues an interrupt to the processor when the required number of bytes have been transferred).

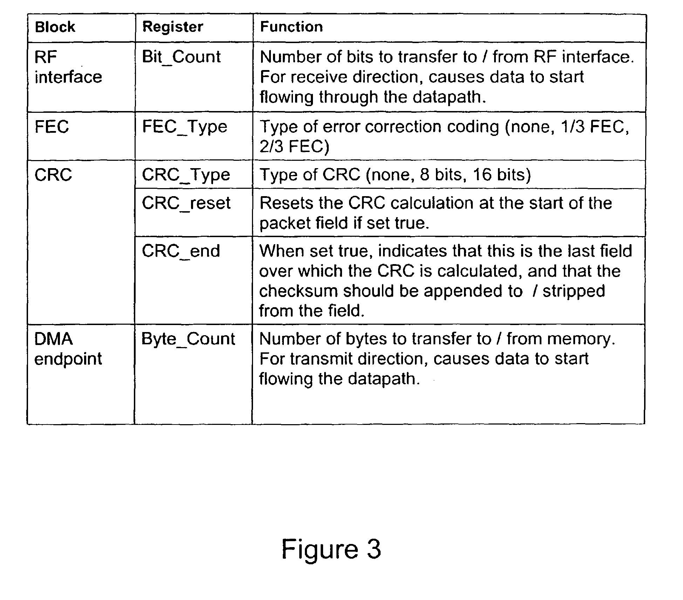

Each block in the packet processing datapath 18 communicates with its neighbours, and contains configuration registers which provide information on what operation the block should perform for the current packet field being processed. An example of a possible register definition for the simple example datapath is shown in Figure 3. It should be noted that a practical implementation is likely to contain both more functional blocks and more configuration registers per block. The packet processing datapath 18 is attached to the bus as a slave via a bus 14 interface block 16. This decodes the bus protocol and performs write or read operations to the configuration registers.

For the case of reception of Bluetooth packets, the microprocessor would first configure the datapath for reception of the header field. For the simple example datapath, this would require 7 programming operations over the microprocessor bus. The *Bit_Count* field for the RF interface would be programmed last, since this would have the side-effect of causing data to begin to flow through the datapath. Once the header is completely received, the microprocessor would receive an interrupt from the end-point. It would then read the packet type from the header. Depending on the packet type, it would be necessary to reprogram some or all of the registers for the subsequent field, and repeat this for every subsequent field. For example, a DH1 packet would first require that the datapath be programmed to receive the payload header. Then, the datapath would need to be reprogrammed to receive the payload body.

The example datapath has a fairly trivial number of configuration registers. In a practical hardware implementation there are likely to be considerably more registers. Also, there may be a number of wait states introduced in gaining access to the registers. This means that such reprogramming can take a significant amount of time (from the system viewpoint). As mentioned previously, decisions during reception are often time-critical. The time taken to do the reprogramming means that there is less time left and therefore there is less flexibility to implement software work-arounds. The alternative is to increase the clock frequency to reduce the time taken, which has an input on system power consumption.

Additionally, a microprocessor (and associated ROM and RAM memories) consumes significant amounts of energy when active. Typically, in an event-driven system such as that described, the processor will be shut down when there are no tasks to perform and will consume almost no energy. Once the "intelligence" of the microprocessor has been used to make a decision about what type of field is to come next, it is wasteful of energy for the processor to perform the manual process of updating each of the registers.

### Summary of the invention.

It is an object of the present invention to solve the above mentioned problems.

According to the present invention there is provided in a first aspect a system for constructing and deconstructing data packets, wherein the system is operable to support a number of different coding formats. The system comprises a processor means, a to the processor means connected processor bus. The system also comprises a to the processor means connected packet processing data path which is attached to the processor bus as a slave via a bus interface means. The packet processing data path comprises a number, n, of blocks, wherein n is an integer, and n=2. Each block comprises configuration registers operable to provide information on what operation the block should perform for said current packet field being processed. The bus interface means comprises a first register operable to control a bus of Update Enable signals, which bus also is connected to each of the n blocks. The bus interface means also comprises a second register operable to control a Mode signal, which also are connected to each of the n blocks. An Update Mode signal is connected to the bus interface means, and to each of the n blocks. A write to the second register causes the Update Mode signal to be pulsed active, triggering the enabled configuration registers to update their values.

The system according to the present invention achieves a way of controlling a datapath, that retains all the advantages of full programmability while minimising the required processor intervention in normal operation. The microprocessor is used for the tasks, i.e. making decisions, in which it is most efficient, while minimizing the time and energy consumption for updating configuration registers.

A further advantage in this context is achieved if each block of said packet processing data path is connected to and communicates with its block neighbours, i.e. said blocks.

Furthermore, it is an advantage in this context if said bus interface means is operable to decode the bus protocol and perform write or read operations to said configuration registers.

A further advantage in this context is achieved if said system also comprises a further set of registers operable to enable or disable the update of said configuration registers.

Furthermore, it is an advantage in this context if said system also comprises additional registers operable to store a pre-defined mode for each configuration register, wherein a complete mode definition, for each configuration register, consists of whether said configuration register should be updated, and if so what value it should be set to.

A further advantage in this context is achieved if a pre-defined mode for each configuration register is hard-wired, wherein a complete mode definition, for each configuration register, consists of whether said configuration register should be updated, and if so what value it should be set to.

Furthermore, it is an advantage in this context if said system also comprises additional registers operable to store a pre-defined mode for some of said configuration registers, and in that a pre-defined mode for the remaining of said configuration registers is hard-wired, wherein a complete mode definition, for each configuration register, consists of whether said configuration register should be updated, and if so what value it should be set to.

A further advantage in this context is achieved if said packet processing data path comprises an RF interface block operable to transfer data to and from a radio, a FEC block operable to perform error correction coding or decoding, a CRC block operable to generate or check a CRC code, and a DMA endpoint block which is connected to said processor means, and operable to request that information bytes be transferred to or from a memory means, comprised in said system, via direct memory access, and to issue an interrupt signal to said processor means when the required number of bytes have been transferred.

Furthermore, it is an advantage in this context if said RF interface block comprises a Bit-Count configuration register operable to store the number of bits to transfer to or from said RF interface block, and in the receive direction, to cause data to start flowing through said packet processing data path.

A further advantage in this context is achieved if said FEC block comprises a FEC-Type configuration register operable to store the type of error correction coding.

Furthermore, it is an advantage in this context if said CRC block comprises a CRC-Type configuration register operable to store the type of CRC, a CRC-reset configuration register operable to reset the CRC calculation at the start of the packet field if set true, and a CRC-end configuration register operable, when set true, to indicate that this is the last field over which the CRC is calculated, and that the checksum should be appended to/stripped from said field.

A further advantage in this context is achieved if said DMA endpoint block comprises a Byte-Count configuration register operable to store the number of bytes to transfer to/from said memory means, and in the transmit direction, to cause data to start flowing through said packet processing data path.

Another object of the invention is to provide a method for constructing and deconstructing data packets with the aid of a system operable to support a number of different coding formats. The system comprises a processor means, a to the processor means connected packet processing data path, which is attached to the processor bus as a slave via a bus interface means. The packet processing data path comprises a number, n, of blocks, wherein n is an integer, and n=2. Each block comprises configuration registers operable to provide information on what operation the block should perform for the current packet field being processed. The bus interface means comprises a first register, and a second register. The method comprises the steps:
- with the aid of said processor means, to transmit a write signal to said second register which then transmits a Mode signal to each block;
- with the aid of said first register, to transmit Update Enable signals to said configuration registers that are defined to be updated for the new mode;
- as a consequence of said write signal, to pulse an Update Mode signal active; and
- to transmit said active Update Mode signal to said n blocks, triggering said enabled configuration registers to update their values in parallel.

The method according to the present invention achieves a way of controlling a datapath, that retains all the advantages of full programmability while minimising the required processor intervention in normal operation. The microprocessor is used for the tasks, i.e. making decisions, in which it is most efficient, while minimizing the time and energy consumption for updating configuration registers.

A further advantage in this context is achieved if said method also comprises the step:
- to enable or disable the update of said configuration registers with the aid of a further set of registers comprised in said system.

Furthermore, it is an advantage in this context if said method also comprises the step:
- with the aid of additional registers comprised in said system, to store a pre-defined mode for each configuration register, wherein a complete mode definition, for each configuration register, consists of whether said configuration register should be updated, and if so what value it should be set to.

A further advantage in this context is achieved if said method also comprises the step:
- to hard-wire a pre-defined mode for each configuration register, wherein a complete mode definition, for each configuration register, consists of whether said configuration register should be updated, and if so what value it should be set to.

Furthermore, it is an advantage in this context if said method also comprises the steps:
- with the aid of additional registers comprises in said system, to store a pre-defined mode for some of said configuration registers; and
- to hard-wire a predefined mode for the remaining of said configuration registers, wherein a complete mode definition, for each configuration register, consists of whether said configuration register should be updated, and if so what value it should be set to.

A further advantage in this context is achieved if each block of said packet processing data path is connected to and is operable to communicate with its block neighbours, i.e., said blocks.

Furthermore, it is an advantage in this context if said method also comprises the steps:
- with the aid of an RF interface block comprised in said packet processing data path, to transfer data to and from a radio;
- with the aid of a FEC block comprised in said packet processing data path, to perform error correction coding or decoding;
- with the aid of CRC block comprised in said packet processing data path, to generate or check a CRC code;
- with the aid of a DMA endpoint block comprised in said packet processing data path, to request that information bytes be transferred to or from a memory means comprised in said system, via direct memory access; and
- to issue an interrupt signal to said processor means when the required number of bytes have been transferred.

A further advantage in this context is achieved if said method also comprises the steps:
- with the aid of a Bit-Count configuration register comprised in said RF interface block, to store the number of bits to transfer to or from said RF interface block; and
- in the receive direction, to cause data to start flowing through said packet processing data path.

Furthermore, it is an advantage in this context if said method also comprises the step:
- with the aid of a FEC-Type configuration register comprised in said FEC block, to store the type of error correction coding.

A further advantage in this context is achieved if said method also comprise the steps:
- with the aid of a CRC-Type configuration register comprised in said CRC block, to store the type of CRC;
- with the aid of a CRC-reset configuration register comprised in said CRC block, to reset the CRC calculation at the start of the packet field if set true; and
- with the aid of a CRC-end configuration register comprised in said CRC block, when set true, to indicate that this is the last field over which the CRC is calculated, and that the checksum should be appended to/stripped from said field.

Furthermore, it is an advantage in this context if said method also comprises the steps:
- with the aid of a Byte-Count configuration register comprised in said DMA endpoint block, to store the number of bytes to transfer to/from said memory means; and
- in the transmit direction, to cause data to start flowing through said packet processing data path.

Another object of the present invention is to provide at least one computer program product for constructing and deconstructing data packets. The at least one computer program product is/are directly loadable into the internal memory of at least one digital computer. The computer program product (s) comprises software code portions for performing the steps of the method according to the present invention, when said at least one product is/are run on said at least one computer.

The computer program product (s) according to the present invention provides a way of controlling a datapath, that retains all the advantages of full programmability while minimizing the required processor intervention in normal operation. The microprocessor is used for the tasks, i.e. making decisions, in which it is most efficient, while minimizing the time and energy consumption for updating configuration registers.

It should be emphasised that the term "comprises/comprising" when used in this specification is taken to specify the presence of stated features, steps or components but does not preclude the presence of one or more other features, integers, steps, components or groups thereof.

Embodiments of the invention will now be described with a reference to the accompanying drawings, in which:

### Brief description of the drawings.

Figure 1 shows different examples of Bluetooth^{®} packets types;
Figure 2 shows a block diagram of a system for constructing and deconstructing data packets according to the prior art;
Figure 3 shows some examples of configuration registers comprised in the system disclosed in Figure 2;

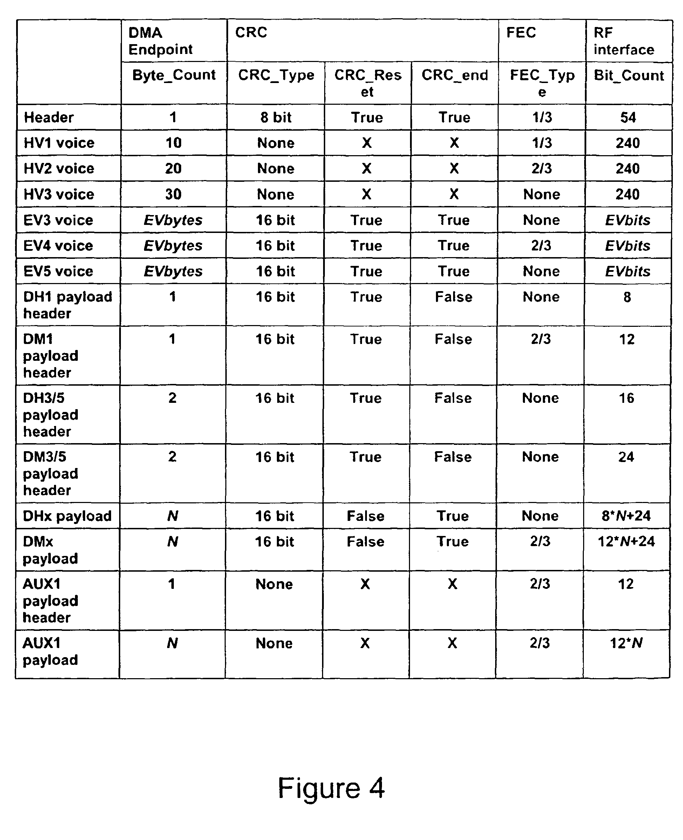

Figure 4 shows some examples of register configurations for different packet fields;
Figure 5 shows a block diagram of a system for constructing and deconstructing data packets according to the present invention;
Figure 6 is a flow chart of the method for constructing and deconstructing data packets according to the present invention; and
Figure 7 shows a schematic diagram of some computer program products according to the present invention.

### Detailed description of embodiments.

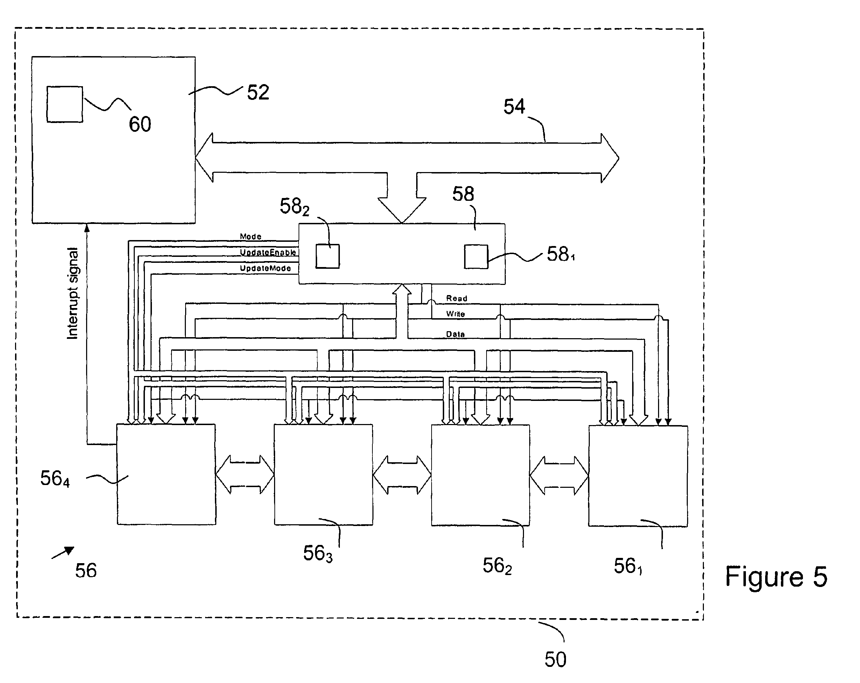

Figure 5 shows a block diagram of a system 50 for constructing and deconstructing data packets according to the present invention. The system 50 is operable to support a number of different coding formats. The system 50 comprises a processor means 52, and a to the processor means 52 connected processor bus 54. The system 50 also comprises a packet processing data path 56 connected to the processor means 52. The packet processing data path 56 is also attached to the processor bus 54 as a slave via a bus interface means 58. The packet processing data path 56 comprises a number, n, of blocks 56₁-56ₙ, wherein n is an integer, and n=2. In the packet processing data path 56 disclosed in figure 5, there is four blocks 56₁-56₄. Each block 56₁-56₄ comprises configuration registers (not disclosed in Figure 5) operable to provide information on what operation the block 56₁-56₄ should perform for said current packet field being processed. The bus interface means 58 comprises a first register 58₁ operable to control a bus of Update Enable signals, which bus also is connected to each of the four blocks 56₁-56₄. The bus interface means 58 comprises also a second register 58₂ operable to control a Mode signal, which also is connected to each of the four blocks 56₁-56₄. As also is apparent in Figure 5, an Update Mode signal is connected to the bus interface means 58 and to each of the four blocks 56₁-56₄. A write to the second register 58₂ causes the Update Mode signal to be pulsed active, which will trigger the enabled configuration registers to update their values. As also is apparent from figure 5, each block 56₁; 56₂; 56₃; 56₄ of the packet processing data path 56 is connected to and communicates with its block neighbours. The bus interface means 58 is operable to decode the bus protocol and perform write or read operations to the configuration registers.

In a preferred embodiment of the system 50 according to the present invention, the system 50 also comprises a further set of registers operable to enable or disable the update of the configuration registers.

In a preferred embodiment of the system 50 according to the present invention, the system 50 also comprises additional registers operable to store a pre-defined mode for each configuration register. A complete mode definition, for each configuration register, consists of whether the configuration register should be updated, and if so what value it should be set to.
According to another embodiment of the system 50, a pre-defined mode for each configuration register is hard-wired.

According to yet another embodiment of the system 50, the system 50 comprises additional registers operable to store a pre-defined mode for some of the configuration registers, and in that a pre-defined mode for the remaining of the configuration registers is hard-wired.

According to another embodiment of the system 50, the packet processing data path 56 comprises an RF interface block 56₁, operable to transfer data to and from a radio, a FEC block 56₂ operable to perform error correction coding or decoding, a CRC block 56₃ operable to generate or check a CRC code, and a DMA endpoint block 56₄ which is connected to the processor means 52, and operable to request that information bytes be transferred to or from a memory means 60, comprised in the system 50 (see Figure 5), via direct memory access, and to issue an interrupt signal to the processor means 52 when the required number of bytes have been transferred.

According to another embodiment of the system 50, the RF interface block 56₁, comprises a Bit Count configuration register operable to store the number of bits to transfer to or from the RF interface block 56₁, and in the receive direction, to cause data to start flowing through the packet processing data path 56.

According to another embodiment of the system 50, the FEC block 56₂ comprises a FEC-Type configuration register operable to store the type of error correction coding.

According to another embodiment of the system 50, the CRC block 56₃ comprises a CRC-Type configuration register operable to store the type of CRC, a CRC-reset configuration register operable to reset the CRC calculation at the start of the packet field if set true, and a CRC-end configuration register operable, when set true, to indicate that this is the last field over which the CRC is calculated, and that the checksum should be appended to/stripped from the field.

According to another embodiment of the system 50, the DMA endpoint block 56₄ comprises a Byte-Count configuration register operable to store the number of bytes to transfer to/ from the memory means 60, and in the transmit direction, to cause data to start flowing through the data processing data path 56.

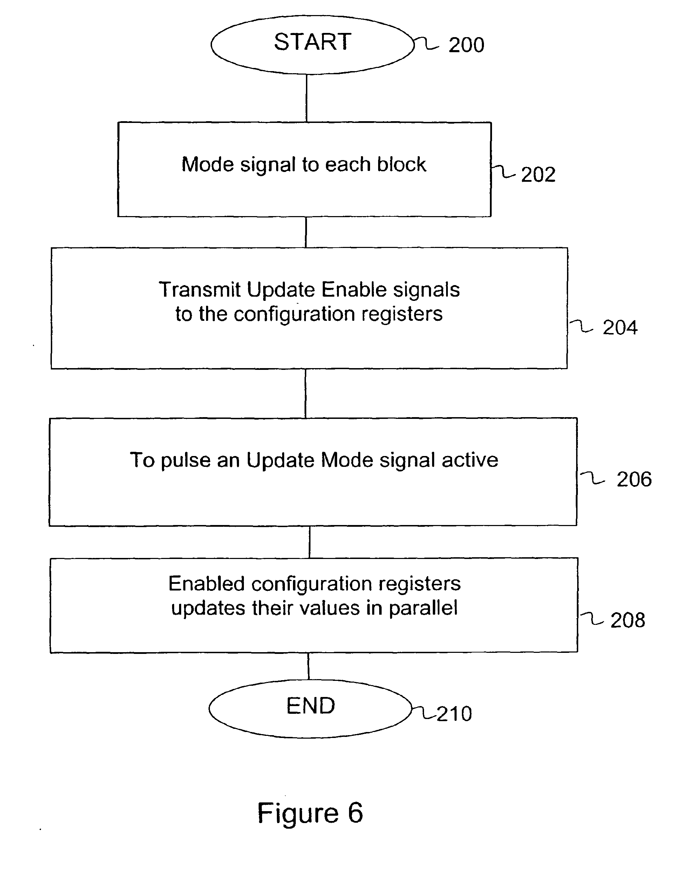

In figure 6 there is disclosed a flow chart of the method for constructing and deconstructing data packets according to the present invention. This method is performed with the aid of a system 50 (see Figure 5) operable to support a number of different coding formats, which system 50 comprises a processor means 52, a to the processor means 52 connected processor bus 54, a to the processor means 52 connected packet processing data path 56 which is attached to the processor bus 54 as a slave via a bus interface means 58. The packet processing data path 56 comprises a number, n, of blocks 56₁;... ;56ₙ, wherein n is an integer, and n=2. Each block 56₁;... ;56ₙ operable to provide information on what operation the block 56₁;... ;56ₙ should perform on the current packet field being processed. The bus interface means 58 comprises a first register 58₁, and a second register 58₂. The method begins at block 200. The method continues, at block 202, with the step: with the aid of the processor means 52, to transmit a write signal to the second register 58₂, which then transmits a Mode signal to each block 56₁;... ; 56ₙ. Thereafter, the method continues, at block 204, with the step: with the aid of the first register 58₁, to transmit Update Enable signals to the configuration registers that are defined to be updated for the new mode. The method continues, at block 206, with the step: as a consequence of the write signal, to pulse an Update Mode signal active. Thereafter, the method continues, at block 208, with the step: to transmit the active Update Mode signal to the n blocks 56₁;... ; 56ₙ, triggering the enabled configuration registers to update their values in parallel. The method is completed at block 210.

According to another embodiment of the method, it also comprises the step: to enable or disable the update of the configuration registers with the aid of a further set of registers comprised in the system 50.

According to yet another embodiment, the method also comprise the step: - with the aid of additional registers comprised in the system 50, to store a pre-defined mode for each configuration register, wherein a complete mode definition, for each configuration register, consists of whether the configuration register should be updated, and if so what value it should be set to.

According to another embodiment, the method also comprises the step: to hard-wire a pre-defined mode for each configuration register.

According to yet another embodiment, the method also comprises the steps: with the aid of additional registers comprised in the system 50, to store a pre-defined mode for some of the configuration registers, and to hard-wire a pre-defined mode for the remaining of the configuration registers.

According to another embodiment, each block 56ₓ of the packet processing data path 56 is connected to and is operable to communicate with its neighbours, i.e. the blocks 56ₓ₋₁, 56ₓ₊₁.

According to another embodiment, the method also comprises the steps:
- with the aid of an RF interface block 56₁ comprised in said packet processing data path 56, to transfer data to and from a radio;
- with the aid of a FEC block 56₂ comprised in said packet processing data path 56, to perform error correction coding or decoding;
- with the aid of CRC block 56₃ comprised in said packet processing data path 56, to generate or check a CRC code;
- with the aid of a DMA endpoint block 56ₙ comprised in said packet processing data path 56, to request that information bytes be transferred to or from a memory means 60 comprised in said system 50, via direct memory access; and
- to issue an interrupt signal to said processor means 52 when the required number of bytes have been transferred.

According to another embodiment, the method also comprises the steps:
- with the aid of a Bit-Count configuration register comprised in said RF interface block 56₁, to store the number of bits to transfer to or from said RF interface block 56₁; and
- in the receive direction, to cause data to start flowing through said packet processing data path 56.

According to another embodiment, the method also comprises the step:
- with the aid of a FEC-Type configuration register comprised in said FEC block 56₂, to store the type of error correction coding.

According to another embodiment, the method also comprises the steps:
- with the aid of a CRC-Type configuration register comprised in said CRC block 56₃, to store the type of CRC;
- with the aid of a CRC-reset configuration register comprised in said CRC block 56₃, to reset the CRC calculation at the start of the packet field if set true; and
- with the aid of a CRC-end configuration register comprised in said CRC block 56₃, when set true, to indicate that this is the last field over which the CRC is calculated, and that the checksum should be appended to/stripped from said field.

According to another embodiment, the method also comprises the steps:
- with the aid of a Byte-Count configuration register comprised in said DMA endpoint block 56ₙ, to store the number of bytes to transfer to/from said memory means 60; and
- in the transmit direction, to cause data to start flowing through said packet processing data path 56.

In the following, there will be a description of the present invention with other words.

The invention describes a modified datapath, and a method for controlling it, that retains all the advantages of full programmability while minimising the required processor intervention in normal operation.

At the time of designing the datapath hardware and / or releasing the software for the device, the protocol to be implemented must be defined (even if it is expected to change in some details at a later stage). This means that values for configuration registers for most or all of the different fields of the different packet types can be defined in advance. According to the invention, these pre-defined configurations ('modes') are stored in the different processing blocks of the datapath. A complete 'mode' definition consists, for each configuration register, of whether that particular register should be updated and if so what value it should be set to.

The per-mode settings for each configuration register can be stored either in additional registers (which are programmed only once at start-up) or the configurations can be hard-wired. The advantage of the register-based approach is maximum flexibility, at the expense of additional hardware. A mixture of the two approaches may be desired: all or part of the configuration for a particular mode can be contained in registers, depending on the confidence that a particular configuration register will need to be changed subsequently.

In order to receive a certain field of a packet, the microprocessor programs a single register, which selects the appropriate mode and simultaneously informs all datapath blocks of the change to the new mode. Each datapath block then updates those configuration registers that are defined to be updated for this new mode. Should there be further changes that are unique to each packet (e.g. the length of a data payload) then these can be written individually after the main mode change.

In order to maintain flexibility for future protocol changes or work-arounds, the method can be enhanced by a further set of register which enables or disables the update of configuration registers. Each configuration could be represented by a single bit, and therefore a single write to a 32-bit register could select 32 different configuration registers to be updated or not. For example, the *Bit_Count* register has the side effect of causing data to start being fed through the datapath. If there is a requirement to change the number of bits in a particular field (or to support a new type of field), then the processor can clear the relevant bit in the register before selecting the affected mode. The processor can then update only *Bit_Count* according to the new requirement.

If there is a mode (particularly a rarely used one) that differs only slightly from another mode, then the less commonly used mode can be made a special case of another mode. For instance, AUX1 packets are very similar to DM1 packets with the exception that no CRC is applied to the payload. In this case, the processor would select the appropriate DM1 mode, and then reprogram the CRC configuration to "No CRC".

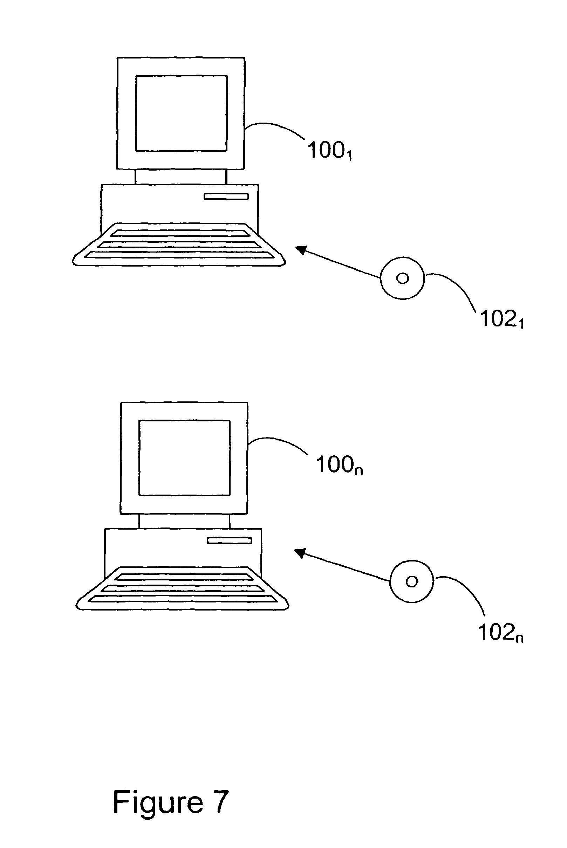

In Figure 7 there is disclosed a schematic diagram of some computer program products for constructing and deconstructing data packets according to the present invention. There is disclosed n different digital computers 100₁,..., 100ₙ, wherein n is an integer. There is also disclosed n different computer program products 102₁,..., 102ₙ, here shown in the form of compact discs. The different computer program products 102₁,..., 102ₙ are directly loadable into the internal memory of the n different digital computers 100₁,..., 100ₙ. Each computer program product 102₁,..., 102ₙ comprises software code portions for performing some or all of the steps of Figure 6 when the product (s) 102₁,..., 102ₙ is/are run on said computer (s) 100₁,..., 100ₙ. The computer program products 102₁,..., 102ₙ can e.g. be in the form of floppy disks, RAM disks, magnetic tapes, opto-magnetic disks or any other suitable products.

The invention is not limited to the embodiments described in the foregoing. It will be obvious that many different modifications are possible within the scope of the following claims.

## Claims

1. A system (50) for constructing and deconstructing data packets, said system (50) comprising a packet processing data path (56) and a bus interface means (58), the packet processing data path (56) comprising a number, n, of processing blocks (56₁; ...; 56ₙ), **characterized in that** a processing block (56₁; ...; 56ₙ) comprising configuration registers storing information on an operation to be performed by said processing block (56₁; ...; 56ₙ) for a current packet field being processed, said bus interface means (58) comprising a first register (58₁) for controlling a bus of Update Enable signals being receivable by the number of processing blocks (56₁; ...; 56ₙ), said bus interface means (58) further comprising a second register (58₂) operable for controlling a Mode signal being receivable by the number of processing blocks (56₁; ...; 56ₙ), said bus interface means (58) providing an Update Mode signal to the number of processing blocks (56₁; ...; 56ₙ), wherein a write to said second register (58₂) causes said Update Mode signal to be pulsed active, triggering said enabled configuration registers to update their values.

2. The system (50) for constructing and deconstructing data packets according to claim 1, said system (50) being operable to support a number of different coding formats, said system comprising a processor means (52), a to said processor means (52) connected processor bus (54), said packet processing data path (56) being connected to.said processor means (52), said packet processing data path (56) being attached to said processor bus (54) as a slave via a bus interface means (58), wherein n=2.

3. The system for constructing and deconstructing data packets according to claim 1 or 2, each processing block (56₁; ...; 56ₙ) comprising configuration registers operable to provide information on what operation said block (56₁; ...; 56ₙ) should perform.

4. The system (50) for constructing and deconstructing data packets according to any one of claims claim 1 to 3, wherein each block (56ₓ) of said packet processing data path (56) is connected to and communicates with its block neighbours (56ₓ₋₁, 56ₓ₊₁).

5. The system (50) for constructing and deconstructing data packets according to any one of claims 1 - 4, wherein said bus interface means (58) is operable to decode the bus protocol and perform write or read operations to said configuration registers.

6. The system (50) for constructing and deconstructing data packets according to any one of claims 1 - 5, wherein said system (50) also comprises a further set of registers operable to enable or disable the update of said configuration registers.

7. The system (50) for constructing and deconstructing data packets according to any one of claims 1 - 6, wherein said system (50) also comprises additional registers operable to store a pre-defined mode for each configuration register, wherein a complete mode definition, for each configuration register, consists of whether said configuration register should be updated, and if so what value it should be set to.

8. The system (50) for constructing and deconstructing data packets according to any one of claims 1 - 6, wherein a pre-defined mode for each configuration register is hard-wired, wherein a complete mode definition, for each configuration register, consists of whether said configuration register should be updated, and if so what value it should be set to.

9. The system (50) for constructing and deconstructing data packets according to any one of claims 1 - 6, wherein said system (50) also comprises additional registers operable to store a pre-defined mode for some of said configuration registers, and in that a pre-defined mode for the remaining of said configuration registers is hard-wired, wherein a complete mode definition, for each configuration register, consists of whether said configuration register should be updated, and if so what value it should be set to.

10. The system (50) for constructing and deconstructing data packets according to any one of claims 2 - 9, when dependent on claim 2, wherein said packet processing data path (56) comprises an RF interface block (56₁) operable to transfer data to and from a radio, a FEC block (56₂) operable to perform error correction coding or decoding, a CRC block (56₃) operable to generate or check a CRC code, and a DMA endpoint block (56ₙ) which is connected to said processor means (52), and operable to request that information bytes be transferred to or from a memory means (60), comprised in said system (50), via direct memory access, and to issue an interrupt signal to said processor means (52) when the required number of bytes have been transferred.

11. The system (50) for constructing and deconstructing data packets according to claim 9, wherein said RF interface block (56₁) comprises a Bit-Count configuration register operable to store the number of bits to transfer to or from said RF interface block (56₁), and in the receive direction, to cause data to start flowing through said packet processing data path (56).

12. The system (50) for constructing and deconstructing data packets according to claim 10 or 11, wherein said FEC block (56₂) comprises a FEC-Type configuration register operable to store the type of error correction coding.

13. The system (50) for constructing and deconstructing data packets according to any one of claims 10 - 12, wherein said CRC block (56₃) comprises a CRC-Type configuration register operable to store the type of CRC, a CRC-reset configuration register operable to reset the CRC calculation at the start of the packet field if set true, and a CRC-end configuration register operable, when set true, to indicate that this is the last field over which the CRC is calculated, and that the checksum should be appended to/stripped from said field.

14. The system (50) for constructing and deconstructing data packets according to any one of claims 10 - 13, wherein said DMA endpoint block (56ₙ) comprises a Byte-Count configuration register operable to store the number of bytes to transfer to/from said memory means (60), and in the transmit direction, to cause data to start flowing through said packet processing data path (56).

15. A method for constructing and deconstructing data packets with the aid of a system (50), which system (50) comprises a packet processing data path (56) and a bus interface means (58), wherein said packet processing data path (56) comprises a number, n, of blocks (56₁; ...; 56ₙ), wherein n is an integer, wherein each block (56₁; ...; 56ₙ) comprises configuration registers operable to provide information on what operation said block (56₁; ...; 56ₙ) should perform for said current packet field being processed, said bus interface means (58) comprising a first register (58₁) and a second register (58₂), the method comprising:
- with the aid of said processor means (52), to transmit a write signal to said second register (58₂) which then transmits a Mode signal to each block (56₁; ...; 56ₙ) ;
- with the aid of said first register (58₁), to transmit Update Enable signals to said configuration registers that are defined to be updated for the new mode;
- as a consequence of said write signal, to pulse an Update Mode signal active; and
- to transmit said active Update Mode signal to said n blocks (56₁; ...; 56ₙ), triggering said enabled configuration registers to update their values in parallel.

16. The method according to claim 15, said system (50) being operable to support a number of different coding formats, said system comprising a processor means (52), a to said processor means connected processor bus (54), said packet processing data path (56) being connected to said processor means (52), said packet processing data path (56) being attached to said processor bus (54) as a slave via a bus interface means (58), wherein n=2.

17. The method for constructing and deconstructing data packets according to claim 15, wherein said method also comprises the step:
- to enable or disable the update of said configuration registers with the aid of a further set of registers comprised in said system (50).

18. The method for constructing and deconstructing data packets according to any one of claims 15 - 17, wherein said method also comprises the step:
- with the aid of additional registers comprised in said system (50), to store a pre-defined mode for each configuration register, wherein a complete mode definition, for each configuration register, consists of whether said configuration register should be updated, and if so what value it should be set to.

19. The method for constructing and deconstructing data packets according to any one of claims 15 - 17, wherein said method also comprises the step:
- to hard-wire a pre-defined mode for each configuration register, wherein a complete mode definition, for each configuration register, consists of whether said configuration register should be updated, and if so what value it should be set to.

20. The method for constructing and deconstructing data packets according to any one of claims 15 - 17, wherein said method also comprises the steps:
- with the aid of additional registers comprises in said system (50), to store a pre-defined mode for some of said configuration registers; and
- to hard-wire a predefined mode for the remaining of said configuration registers, wherein a complete mode definition, for each configuration register, consists of whether said configuration register should be up-dated, and if so what value it should be set to.

21. The method for constructing and deconstructing data packets according to any one of claims 15 - 20, wherein each block (56ₓ) of said packet processing data path (56) is connected to and is operable to communicate with its block neighbours (56ₓ₋₁, 56ₓ₊₁).

22. The method for constructing and deconstructing data packets according to claim 21, wherein said method also comprises the steps:
- with the aid of an RF interface block (56₁) comprised in said packet processing data path (56), to transfer data to and from a radio;
- with the aid of a FEC block (56₂) comprised in said packet processing data path (56), to perform error correction coding or decoding;
- with the aid of CRC block (56₃) comprised in said packet processing data path (56), to generate or check a CRC code;
- with the aid of a DMA endpoint block (56ₙ) comprised in said packet processing data path (56), to request that information bytes be transferred to or from a memory means (60) comprised in said system (50), via direct memory access; and
- to issue an interrupt signal to said processor means (52) when the required number of bytes have been transferred.

23. The method for constructing and deconstructing data packets according to claim 22, wherein said method also comprises the steps:
- with the aid of a Bit-Count configuration register comprised in said RF interface block (56₁), to store the number of bits to transfer to or from said RF interface block (56₁) ; and
- in the receive direction, to cause data to start flowing through said packet processing data path (56).

24. The method for constructing and deconstructing data packets according to claim 22 or 23, wherein said method also comprises the step:
- with the aid of a FEC-Type configuration register comprised in said FEC block (56₂), to store the type of error correction coding.

25. The method for constructing and deconstructing data packets according to any one of claims 22 - 24, wherein said method also comprise the steps:
- with the aid of a CRC-Type configuration register comprised in said CRC block (56₃), to store the type of CRC;
- with the aid of a CRC-reset configuration register comprised in said CRC block (56₃), to reset the CRC calculation at the start of the packet field if set true; and
- with the aid of a CRC-end configuration register comprised in said CRC block (56₃), when set true, to indicate that this is the last field over which the CRC is calculated, and that the checksum should be appended to/stripped from said field.

26. The method for constructing and deconstructing data packets according to any one of claims 22 - 25, wherein said method also comprises the steps:
- with the aid of a Byte-Count configuration register comprised in said DMA endpoint block (56ₙ), to store the number of bytes to transfer to/from said memory means (60); and
- in the transmit direction, to cause data to start flowing through said packet processing data path (56).

27. A computer program product (102₁, ..., 102ₙ) for constructing and deconstructing data packets, said computer program product (102₁, ..., 102ₙ) being directly loadable into an internal memory of a digital computer (100₁, ..., 100ₙ), comprising software code portions for performing steps of the method for constructing and deconstructing all data packets according to any one of claims 15 to 26 when the product (102₁, ..., 102ₙ) runs on said computer (100₁, ..., 100ₙ).

## Patentansprüche

1. Ein System (50) zum Erstellen und Zerlegen von Datenpaketen, wobei besagtes System (50) einen paketverarbeitenden Datenpfad (56) und ein Busschnittstellenmittel (58) umfasst, wobei der paketverarbeitende Datenpfad (56) eine Anzahl n von verarbeitenden Blöcken (56₁; ...; 56ₙ) umfasst, **gekennzeichnet dadurch, dass** ein verarbeitender Block (56₁; ...; 56ₙ) Konfigurationsregister umfasst, die Information über einen von besagtem verarbeitenden Block (56₁; ...; 56ₙ) für ein momentanes verarbeitet werdendes Paketfeld durchzuführenden Arbeitsschritt speichern, besagtes Busschnittstellenmittel (58) ein erstes Register (58₁) zum Steuern eines Bus von Aktualisierungsaktivierungssignalen umfasst, welche von der Anzahl von verarbeitenden Blöcken (56₁; ...; 56ₙ) empfangen werden können, besagtes Busschnittstellenmittel (58) weiterhin ein zweites Register (58₂) umfasst, welches zum Steuern eines von der Anzahl der verarbeitenden Blöcke (56₁; ...; 56ₙ) empfangbar seienden Modussignal betreibbar ist, das besagte Busschnittstellenmittel (58) ein Modusaktualisierungssignal für die Anzahl von verarbeitenden Blöcken (56₁; ...; 56ₙ) bereitstellt und wobei ein Schreiben in besagtes zweite Register (58₂) besagtes Modusaktualisierungssignal dazu veranlasst, aktiv geschaltet zu werden, was besagte aktivierte Konfigurationsregister veranlasst, ihre Werte zu aktualisieren.

2. Das System (50) zum Erstellen und Zerlegen von Datenpaketen gemäß Anspruch 1, wobei besagtes System (50) betreibbar ist, um eine Anzahl von verschiedenen Codierungsformaten zu unterstützen, besagtes System ein Prozessormittel (52) und einen mit besagtem Prozessormittel (52) verbundenen Prozessorbus (54) umfasst, besagter paketverarbeitender Datenpfad (56) mit besagtem Prozessormittel (52) verbunden ist und besagter paketverarbeitende Datenpfad (56) an besagten Prozessorbus (54) als ein Folgegerät über ein Busschnittstellenmittel (58) angeschlossen ist, wobei n=2 ist.

3. Das System (50) zum Erstellen und Zerlegen von Datenpaketen gemäß Anspruch 1 oder 2, wobei jeder verarbeitende Block (56₁; ...; 56ₙ) Konfigurationsregister umfasst, welche betreibbar sind, um Information darüber bereitzustellen, welchen Arbeitsschritt besagter Block (56₁; ...; 56ₙ) ausführen soll.

4. Das System (50) zum Erstellen und Zerlegen von Datenpaketen gemäß einem der Ansprüche 1 bis 3, wobei jeder Block (56ₓ) besagten paketverarbeitenden Datenpfades (56) mit seinen Blocknachbarn (56ₓ₋₁, 56ₓ₊₁) verbunden ist und mit letzteren kommuniziert.

5. Das System (50) zum Erstellen und Zerlegen von Datenpaketen gemäß einem der Ansprüche 1 bis 4, wobei besagtes Busschnittstellenmittel (58) betreibbar ist, das Busprotokoll zu decodieren und Schreib- oder Lesearbeitsschritte in besagten Konfigurationsregistern auszuführen.

6. Das System (50) zum Erstellen und Zerlegen von Datenpaketen gemäß einem der Ansprüche 1 bis 5, wobei besagtes System (50) auch einen weiteren Satz von Registern umfasst, welche betreibbar sind, die Aktualisierung von besagten Konfigurationsregistern zu aktivieren oder zu deaktivieren.

7. Das System (50) zum Erstellen und Zerlegen von Datenpaketen gemäß einem der Ansprüche 1 bis 6, wobei besagtes System (50) auch zusätzliche Register umfasst, welche betreibbar sind, einen vorbestimmten Modus für jedes Konfigurationsregister zu speichern, wobei eine vollständige Modusbestimmung für jedes Konfigurationsregister darin besteht, ob besagtes Konfigurationsregister aktualisiert werden sollte und falls ja, auf welchen Wert es gesetzt werden sollte.

8. Das System (50) zum Erstellen und Zerlegen von Datenpaketen gemäß einem der Ansprüche 1 bis 6, wobei ein vorbestimmter Modus für jedes Konfigurationsregister fest verdrahtet ist, wobei eine vollständige Modusbestimmung für jedes Konfigurationsregister darin besteht, ob besagtes Konfigurationsregister aktualisiert werden sollte und falls ja, auf welchen Wert es gesetzt werden sollte.

9. Das System (50) zum Erstellen und Zerlegen von Datenpaketen gemäß einem der Ansprüche 1 bis 6, wobei besagtes System (50) auch zusätzliche Register umfasst, welche betreibbar sind, einen vorbestimmten Modus für einige besagter Konfigurationsregister zu speichern, und darin, dass ein vorbestimmter Modus für die verbleibenden der besagten Konfigurationsregister fest verdrahtet ist, wobei eine vollständige Modusbestimmung für jedes Konfigurationsregister darin besteht, ob besagtes Konfigurationsregister aktualisiert werden sollte und falls ja, auf welchen Wert es gesetzt werden sollte.

10. Das System (50) zum Erstellen und Zerlegen von Datenpaketen gemäß einem der Ansprüche 2 bis 9, falls sie von Anspruch 2 abhängen, wobei besagter paketverarbeitender Datenpfad (56) einen RF-Schnittstellenblock (56₁), welcher betreibbar ist, Daten zu und von einem Funkgerät zu übergeben, einen FEC-Block (56₂), welcher betreibbar ist, fehlerberichtigendes Codieren oder Decodieren auszuführen, einen CRC-Block (56₃), welcher betreibbar ist, einen CRC-Code zu erzeugen oder zu überprüfen, und einen DMA-Endpunktblock (56ₙ) umfasst, welcher mit besagtem Prozessormittel (52) verbunden ist und betreibbar ist, anzufordern, dass Informationsbytes zu oder von einem Speichermittel (60), welches von besagtem System (50) umfasst wird, über direkten Speicherzugriff zu übergeben und ein Unterbrechungssignal an besagtes Prozessormittel (52) auszugeben, wenn die erforderliche Anzahl von Bytes übergeben worden sind.

11. Das System (50) zum Erstellen und Zerlegen von Datenpaketen gemäß Anspruch 9, wobei besagter RF-Schnittstellenblock (56₁) ein Bitzählerkonfigurationsregister umfasst, welches betreibbar ist, die Anzahl von Bits zu speichern, die zu oder von besagtem RF-Schnittstellenblock (56₁) übergeben werden sollen, und in Empfangsrichtung Daten zu veranlassen, durch besagten paketverarbeitenden Datenpfad (56) zu fließen zu beginnen.

12. Das System (50) zum Erstellen und Zerlegen von Datenpaketen gemäß Anspruch 10 oder 11, wobei besagter FEC-Block (56₂) ein FEC-artiges Konfigurationsregister umfasst, welches betreibbar ist, die Art von fehlerberichtigendem Codieren zu speichern.

13. Das System (50) zum Erstellen und Zerlegen von Datenpaketen gemäß einem der Ansprüche 10 bis 12, wobei besagter CRC-Block (56₃) ein CRC-artiges Konfigurationsregister, welches betreibbar ist, die Art von CRC zu speichern, ein CRC-Rücksetzkonfigurationsregister, welches betreibbar ist, die CRC-Berechnung zu Beginn des Paketfeldes zurückzusetzen, falls es auf wahr gesetzt ist, und ein CRC-Endkonfigurationsregister umfasst, welches betreibbar ist, falls es auf wahr gesetzt ist, anzuzeigen, dass dies das letzte Feld ist, über welche der CRC berechnet wird, und dass die Prüfsumme an besagtes Feld angehängt bzw. von besagtem Feld entfernt werden soll.

14. Das System (50) zum Erstellen und Zerlegen von Datenpaketen gemäß einem der Ansprüche 10 bis 13, wobei besagter DMA-Endpunktblock (56ₙ) ein Bytezählerkonfigurationsregister umfasst, welches betreibbar ist, die Anzahl von Bytes zu speichern, die zu/von besagtem Speichermittel (60) übergeben werden sollen, und in Übertragungsrichtung Daten zu veranlassen, durch besagten paketverarbeitenden Datenpfad (56) zu fließen zu beginnen.

15. Ein Verfahren zum Erstellen und Zerlegen von Datenpaketen mit Hilfe eines Systems (50), welches einen paketverarbeitenden Datenpfad (56) und ein Busschnittstellenmittel (58) umfasst, wobei besagter paketverarbeitender Datenpfad (56) eine Anzahl n von Blöcken (56₁; ...; 56ₙ) umfasst, wobei n eine natürliche Zahl ist, wobei jeder Block (56₁; ...; 56ₙ) Konfigurationsregister umfasst, die betreibbar sind, Information darüber bereitzustellen, welchen Arbeitsschritt besagter Block (56₁; ...; 56ₙ) für ein momentanes verarbeitet werdendes Paketfeld durchführen sollte, und besagtes Busschnittstellenmittel (58) ein erstes Register (58₁) und ein zweites Register (58₂) umfasst, wobei das Verfahren umfasst:
- mit Hilfe von besagtem Prozessormittel (52) ein Schreibsignal an besagtes zweites Register (58₂) zu übertragen, welches dann ein Modussignal an jeden Block (56₁; ... ; 56ₙ) überträgt;
- mit Hilfe von besagtem ersten Register (58₁) Aktualisierungsaktivierungssignale an besagte Konfigurationsregister zu übertragen, die dazu bestimmt sind, für den neuen Modus aktualisiert zu werden;
- infolge des besagten Schreibsignals ein Modusaktualisierungssignal aktiv zu schalten; und
- besagtes aktives Modusaktualisierungssignal an besagte n Blöcke (56₁; ...; 56ₙ) zu übertragen, wobei besagte aktivierte Konfigurationsregister veranlasst werden, ihre Werte parallel zu aktualisieren.

16. Das Verfahren gemäß Anspruch 15, wobei besagtes System (50) betreibbar ist, um eine Anzahl von verschiedenen Codierungsformaten zu unterstützen, besagtes System ein Prozessormittel (52) und einen mit besagtem Prozessormittel (52) verbundenen Prozessorbus (54) umfasst, besagter paketverarbeitender Datenpfad (56) mit besagtem Prozessormittel (52) verbunden ist und besagter paketverarbeitender Datenpfad (56) an besagten Prozessorbus (54) als Folgegerät über ein Busschnittstellenmittel (58) angeschlossen ist, wobei n=2 ist.

17. Das Verfahren zum Erstellen und Zerlegen von Datenpaketen gemäß Anspruch 15, wobei besagtes Verfahren auch den Schritt umfasst:
- die Aktualisierung von besagten Konfigurationsregistern mit Hilfe eines weiteren Satzes von Registers, die von besagtem System (50) umfasst werden, zu aktivieren oder zu deaktivieren.

18. Das Verfahren zum Erstellen und Zerlegen von Datenpaketen gemäß einem der Ansprüche 15 bis 17, wobei besagtes Verfahren auch den Schritt umfasst:
- mit Hilfe von zusätzlichen Registern, die von besagtem System (50) umfasst werden, einen vorbestimmten Modus für jedes Konfigurationsregister zu speichern, wobei eine vollständige Modusbestimmung für jedes Konfigurationsregister darin besteht, ob besagtes Konfigurationsregister aktualisiert werden sollte, und falls ja, auf welchen Wert es gesetzt werden sollte.

19. Das Verfahren zum Erstellen und Zerlegen von Datenpaketen gemäß einem der Ansprüche 15 bis 17, wobei besagtes Verfahren auch den Schritt umfasst:
- einen vorbestimmten Modus für jedes Konfigurationsregister fest zu verdrahten, wobei eine vollständige Modusbestimmung für jedes Konfigurationsregister darin besteht, ob besagtes Konfigurationsregister aktualisiert werden sollte, und falls ja, auf welchen Wert es gesetzt werden sollte.

20. Das Verfahren zum Erstellen und Zerlegen von Datenpaketen gemäß einem der Ansprüche 15 bis 17, wobei besagtes Verfahren auch die Schritte umfasst:
- mit Hilfe von zusätzlichen Registern, die von besagtem System (50) umfasst werden, einen vorbestimmten Modus für einige der besagten Konfigurationsregister zu speichern; und
- einen vorbestimmten Modus für die verbleibenden der besagten Konfigurationsregister fest zu verdrahten, wobei eine vollständige Modusbestimmung für jedes Konfigurationsregister darin besteht, ob besagtes Konfigurationsregister aktualisiert werden sollte, und falls ja, auf welchen Wert es gesetzt werden sollte.

21. Das Verfahren zum Erstellen und Zerlegen von Datenpaketen gemäß einem der Ansprüche 15 bis 20, wobei jeder Block (56ₓ) des besagten paketverarbeitenden Datenpfades (56) mit seinen Blocknachbarn (56ₓ₋₁, 56ₓ₊₁) verbunden ist und betreibbar ist, mit letzteren zu kommunizieren.

22. Das Verfahren zum Erstellen und Zerlegen von Datenpaketen gemäß Anspruch 21, wobei besagtes Verfahren auch die Schritte umfasst :
- mit Hilfe eines RF-Schnittstellenblockes (56₁), der von besagtem paketverarbeitenden Datenpfad (56) umfasst wird, Daten zu und von einem Funkgerät zu übergeben;
- mit Hilfe eines FEC-Blockes (56₂), der von besagtem paketverarbeitenden Datenpfad (56) umfasst wird, fehlerberichtigendes Codieren oder Decodieren durchzuführen;
- mit Hilfe eines CRC-Blockes (56₃), der von besagtem paketverarbeitenden Datenpfad (56) umfasst wird, einen CRC-Code zu erzeugen oder zu überprüfen;
- mit Hilfe eines DMA-Endpunktblockes (56ₙ), der von besagtem paketverarbeitenden Datenpfad (56) umfasst wird, anzufordern, dass Informationsbytes zu oder von einem Speichermittel (60), welches von besagtem System (50) umfasst wird, über direkten Speicherzugriff übergeben werden; und
- ein Unterbrechungssignal an besagtes Prozessormittel (52) auszugeben, wenn die erforderliche Anzahl von Bytes übergeben worden ist.

23. Das Verfahren zum Erstellen und Zerlegen von Datenpaketen gemäß Anspruch 22, wobei besagtes Verfahren auch die Schritte umfasst:
- mit Hilfe eines Bitzählerkonfigurationsregisters, welches von besagtem RF-Schnittstellenblock. (56₁) umfasst wird, die Anzahl von Bits zu speichern, die zu oder von besagtem RF-Schnittstellenblock (56₁) übergeben werden sollen; und
- in der Empfangsrichtung, Daten zu veranlassen, durch den besagten paketverarbeitenden Datenpfad (56) zu fließen zu beginnen.

24. Das Verfahren zum Erstellen und Zerlegen von Datenpaketen gemäß Anspruch 22 oder 23, wobei besagtes Verfahren auch den Schritt umfasst:
- mit Hilfe eines FEC-artigen Konfigurationsregisters, welches von besagtem FEC-Block (56₂) umfasst wird, die Art des fehlerberichtigenden Codierens zu speichern.

25. Das Verfahren zum Erstellen und Zerlegen von Datenpaketen gemäß einem der Ansprüche 22 bis 24, wobei besagtes Verfahren auch die Schritte umfasst:
- mit Hilfe eines CRC-artigen Konfigurationsregisters, welches von besagtem CRC-Block (56₃) umfasst wird, die Art des CRC zu speichern;
- mit Hilfe eines CRC-Rücksetzkonfigurationsregisters, welches von besagtem CRC-Block (56₃) umfasst wird, die CRC-Berechnung zu Beginn des Paketfeldes zurückzusetzen, falls es auf wahr gesetzt ist; und
- mit Hilfe eines CRC-Endkonfigurationsregisters, welches von besagtem CRC-Block (56₃) umfasst wird, falls es auf wahr gesetzt ist, anzuzeigen, dass dies das letzte Feld ist, über welches der CRC berechnet wird, und dass die Prüfsumme an besagtes Feld angehängt bzw. von besagtem Feld entfernt werden sollte.

26. Das Verfahren zum Erstellen und Zerlegen von Datenpaketen gemäß einem der Ansprüche 22 bis 25, wobei besagtes Verfahren auch die Schritte umfasst:
- mit Hilfe eines Bitzählerkonfigurationsregisters, welches von besagtem DMA-Endpunktblock (56ₙ) umfasst wird, die Anzahl von Bytes zu speichern, die zu/von besagtem Speichermittel (60) übergeben werden sollen; und
- in der Übertragungsrichtung, Daten zu veranlassen, durch den besagten paketverarbeitenden Datenpfad (56) zu fließen zu beginnen.

27. Ein Computerprogrammprodukt (102₁, ..., 102ₙ) zum Erstellen und Zerlegen von Datenpaketen, wobei besagtes Computerprogrammprodukt (102₁, ..., 102ₙ) direkt in einen internen Speicher eines digitalen Computers (100₁, ..., 100ₙ) ladbar ist und Softwarecodeteile zum Ausführen von allen Schritten des Verfahrens zum Erstellen und Zerlegen von Datenpaketen gemäß einem der Ansprüche 15 bis 26 umfasst, wenn das Produkt (102₁, ..., 102ₙ) auf besagtem Computer (100₁, ... , 100ₙ) läuft.

## Revendications

1. Système (50) de construction et de déconstruction de paquets de données, le système (50) comprenant un trajet (56) de données de traitement de paquets et un moyen (58) d'interface de bus, le trajet (56) de données de traitement de paquets comprenant un certain nombre, n, de blocs de traitement (56₁; ... ; 56ₙ), **caractérisé en ce qu'**un bloc de traitement (56₁; ... ; 56ₙ) comprend des registres de configuration mémorisant des informations concernant une opération devant être effectuée par le bloc de traitement (56₁ ; ... ; 56ₙ), pour un champ de paquet courant en cours de traitement, le moyen (58) d'interface de bus comprenant un premier registre (58₁) pour commander un bus de signaux de Validation de Mise à Jour qui peuvent être reçus par le nombre de blocs de traitement (56₁ ; ... ; 56ₙ), le moyen (58) d'interface de bus comprenant en outre un deuxième registre (58₂) ayant pour fonction de commander un Signal de Mode qui peut être reçu par le nombre de blocs de traitement (56₁ ; ... ; 56ₙ), le moyen (58) d'interface de bus fournissant un signal de Mode de Mise à Jour au nombre de blocs de traitement (56₁ ; ... ; 56ₙ), dans lequel une écriture dans le deuxième registre (58₂) provoque le basculement du signal de Mode de Mise à Jour à l'état actif, cela déclenchant la mise à jour de leurs valeurs par les registres de configuration validés.

2. Système (50) de construction et de déconstruction de paquets de données suivant la revendication 1, le système (50) ayant pour fonction de prendre en charge un certain nombre de formats de codage différents, le système comprenant un moyen (52) processeur, un bus (54) de processeur connecté au moyen (52) processeur, le trajet (56) de données de traitement de paquets étant connecté au moyen (52) processeur, le trajet (56) de données de traitement de paquets étant rattaché au bus (54) de processeur en tant qu'esclave via un moyen (58) d'interface de bus, dans lequel n=2.

3. Système (50) de construction et de déconstruction de paquets de données suivant la revendication 1 ou 2, chaque bloc (56₁ ; ... ; 56ₙ), de traitement comprenant des registres de configuration ayant pour fonction de fournir des informations concernant l'opération que le bloc (56₁ ; ... ; 56ₙ) doit effectuer.

4. Système (50) de construction et de déconstruction de paquets de données suivant l'une quelconque des revendications 1 à 3, dans lequel chaque bloc (56ₓ) du trajet de données de traitement de paquets est connecté à et communique avec ses blocs voisins (56ₓ₋₁, 56ₓ₊₁).

5. Système (50) de construction et de déconstruction de paquets de données suivant l'une quelconque des revendications 1 - 4, dans lequel le moyen (58) d'interface de bus a pour fonction de décoder le protocole de bus et d'effectuer des opérations d'écriture ou de lecture dans les registres de configuration.

6. Système (50) de construction et de déconstruction de paquets de données suivant l'une quelconque des revendications 1 - 5, dans lequel le système (50) comprend également un autre ensemble de registres ayant pour fonction de valider ou d'invalider la mise à jour des registres de configuration.

7. Système (50) de construction et de déconstruction de paquets de données suivant l'une quelconque des revendications 1 - 6, dans lequel le système (50) comprend également des registres supplémentaires ayant pour fonction de mémoriser un mode défini à l'avance pour chaque registre de configuration, dans lequel une définition de mode complète, pour chaque registre de configuration, consiste à définir si le registre de configuration doit être mis à jour et, si cela est le cas, à quelle valeur il doit être réglé.

8. Système (50) de construction et de déconstruction de paquets de données suivant l'une quelconque des revendications 1 - 6, dans lequel un mode défini à l'avance pour chaque registre de configuration est fixé en dur, et dans lequel une définition de mode complète, pour chaque registre de configuration, consiste à définir si le registre de configuration doit être mis à jour et, si cela est le cas, à quelle valeur il doit être réglé.

9. Système (50) de construction et de déconstruction de paquets de données suivant l'une quelconque des revendications 1 - 6, dans lequel le système (50) comprend également des registres supplémentaires ayant pour fonction de mémoriser un mode défini à l'avance pour certains des registres de configuration, et en ce qu'un mode défini à l'avance pour le reste des registres de configuration est fixé en dur,
dans lequel une définition de mode complète, pour chaque registre de configuration, consiste à définir si le registre de configuration doit être mis à jour et, si cela est le cas, à quelle valeur il doit être réglé.

10. Système (50) de construction et de déconstruction de paquets de données suivant l'une quelconque des revendications 2 - 9, lorsqu'elles dépendent de la revendication 2, dans lequel le trajet (56) de données de traitement de paquets comprend un bloc (56₁) d'interface RF ayant pour fonction de transférer des données vers et en provenance d'un bloc (56₂) radio à correction d'erreurs sans voie de retour (FEC) ayant pour fonction d'effectuer un codage ou un décodage de correction d'erreurs, un bloc (56₃) à code de redondance cyclique (CRC) ayant pour fonction de produire ou de vérifier un code CRC, et un bloc (56ₙ) de point d'extrémité d'accès direct à la mémoire (DMA) qui est connecté au moyen (52) processeur, et ayant pour fonction de demander de transférer des octets d'informations contenus dans le système (50) vers ou en provenance d'un moyen (60) à mémoire, par l'intermédiaire d'un accès direct à la mémoire, et d'envoyer un signal d'interruption au moyen (52) processeur lorsque le nombre requis d'octets a été transféré.

11. Système (50) de construction et de déconstruction de paquets de données suivant la revendication 9, dans lequel le bloc (56₁) d'interface RF comprend un registre de configuration de compte de bits ayant pour fonction de mémoriser le nombre de bits devant être transférés vers ou en provenance du bloc (56₁) d'interface RF et, dans la direction de réception, de faire en sorte que des données commencent à circuler sur le trajet (56) de données de traitement de paquets.

12. Système (50) de construction et de déconstruction de paquets de données suivant la revendication 10 ou 11, dans lequel le bloc (56₂) FEC comprend un registre de configuration de type FEC ayant pour fonction de mémoriser le type de codage de correction d'erreurs.

13. Système (50) de construction et de déconstruction de paquets de données suivant l'une quelconque des revendications 10 - 12, dans lequel le bloc (56₃) CRC comprend un registre de configuration de type CRC ayant pour fonction de mémoriser le type de code CRC, un registre de configuration de réinitialisation CRC ayant pour fonction de réinitialiser le calcul CRC au début du champ de paquets s'il est réglé à "vrai", et un registre de configuration de fin de CRC ayant pour fonction, lorsqu'il est réglé à "vrai", d'indiquer qu'il s'agit du dernier champ sur lequel le code CRC est calculé, et en ce que le total de contrôle doit être ajouté au/retiré du champ.

14. Système (50) de construction et de déconstruction de paquets de données suivant l'une quelconque des revendications 10 - 13, dans lequel le bloc (56ₙ) de point d'extrémité DMA comprend un registre de configuration de Compte d'Octets ayant pour fonction de mémoriser le nombre d'octets devant être transférés vers/depuis le moyen (60) à mémoire et, dans la direction d'émission, de faire en sorte que les données commencent à circuler sur le trajet (56) de données de traitement de paquets.

15. Procédé de construction et de déconstruction de paquets de données à l'aide d'un système (50), lequel système (50) comprend un trajet (56) de données de traitement de paquets et un moyen (58) d'interface de bus, dans lequel le trajet (56) de données de traitement de paquets comprend un certain nombre, n, de blocs (56₁ ; ... ; 56ₙ) , dans lequel n est un entier, dans lequel chaque bloc (56₁ ; ... ; 56ₙ) comprend des registres de configuration ayant pour fonction de fournir des informations indiquant quelle opération doit effectuer le bloc (56₁ ; 56ₙ) pour le champ du paquet courant en cours de traitement, le moyen (58) d'interface de bus comprenant un premier registre (58₁) et un deuxième registre (58₂) le procédé consistant à :
- à l'aide du moyen (52) processeur, transmettre un signal d'écriture au deuxième registre (58₂) qui transmet ensuite un signal de Mode à chaque bloc (56₁ ; ... ; 56ₙ) ;
- à l'aide du premier registre (58₁), transmettre des signaux de Validation de Mise à Jour aux registres de configuration qui sont définis comme devant être mis à jour pour le nouveau mode;
- comme conséquence du signal d'écriture, faire passer un signal de Mode de Mise à Jour au niveau actif ; et
- transmettre le signal de Mode de Mise à Jour actif aux n blocs (56₁ ; ... ; ; 56ₙ), en déclenchant la mise à jour en parallèle par les registres de configuration validés de leurs valeurs.

16. Procédé suivant la revendication 15, le système (50) ayant pour fonction de prendre en charge un certain nombre de formats de codage différents, le système comprenant un moyen (52) processeur, un bus (54) de processeur connecté au moyen processeur, le trajet (56) de données de traitement de paquets étant connecté au moyen (52) processeur, le trajet (56) de données de traitement de paquets étant rattaché au bus (54) processeur en tant qu'esclave par l'intermédiaire du moyen (58) d'interface de bus, dans lequel n=2.

17. Procédé de construction et de déconstruction de paquets de données suivant la revendication 15, dans lequel le procédé comprend également l'étape consistant à :
- valider ou invalider la mise à.jour des registres de configuration à l'aide d'un ensemble supplémentaire de registres contenus dans le système (50).

18. Procédé de construction et de déconstruction de paquets de données suivant l'une quelconque des revendications 15 - 17, dans lequel le procédé comprend également l'étape consistant à :
- à l'aide de registres supplémentaires contenus dans le système (50), mémoriser un mode défini à l'avance pour chaque registre de configuration, dans lequel une définition de mode complète, pour chaque registre de configuration, consiste à définir si le registre de configuration doit être mis à jour et, si cela est le cas, à quelle valeur il doit être réglé.

19. Procédé de construction et de déconstruction de paquets de données suivant l'une quelconque des revendications 15 - 17, dans lequel le procédé comprend également l'étape consistant à :
- fixer en dur un mode défini à l'avance pour chaque registre de configuration, dans lequel une définition de mode complète, pour chaque registre de configuration, consiste à définir si le registre de configuration doit être mis à jour et, si cela est le cas, à quelle valeur il doit être réglé.

20. Procédé de construction et de déconstruction de paquets de données suivant l'une quelconque des revendications 15 - 17, dans lequel le procédé comprend également les étapes consistant à :
- à l'aide de registres supplémentaires contenus dans le système (50), mémoriser un mode défini à l'avance pour certains des registres de configuration ; et
- fixer en dur un mode défini à l'avance pour le reste des registres de configuration, dans lequel une définition de mode complète, pour chaque registre de configuration, consiste à définir si le registre de configuration doit être mis à jour et, si cela est le cas, à quelle valeur il doit être réglé.

21. Procédé de construction et de déconstruction de paquets de données suivant l'une quelconque des revendications 15 - 20, dans lequel chaque bloc (56ₓ) du trajet (56) de données de traitement de paquets est connecté à, et peut fonctionner de façon à communiquer avec ses blocs voisins (56ₓ₋₁, 56ₓ₊₁).

22. Procédé de construction et de déconstruction de paquets de données suivant la revendication 21, dans lequel le procédé comprend également les étapes consistant à :
- à l'aide d'un bloc (56₁) d'interface RF contenu dans le trajet (56) de données de traitement de paquets, transférer des données vers et en provenance d'une interface radio ;
- à l'aide d'un bloc (56₂) FEC contenu dans le trajet (56) de données de traitement de paquets, effectuer un codage
ou un décodage de correction d'erreurs;
- à l'aide du bloc (56₃) CRC contenu dans le trajet (56) de données de traitement de paquets, produire ou vérifier un code CRC ;
- à l'aide d'un bloc (56ₙ) de point d'extrémité DMA contenus dans le trajet (56) de données de traitement de paquets, demander que des octets d'informations soient transférés vers ou en provenance d'un moyen (60) à mémoire contenu dans le système (50), par un accès direct à la mémoire ; et
- envoyer un signal d'interruption au moyen (52) processeur lorsque le nombre requis d'octets a été transféré.

23. Procédé de construction et de déconstruction de paquets de données suivant la revendication 22, dans lequel le procédé comprend également les étapes consistant à :
- à l'aide d'un registre de configuration de Compte de Bits contenu dans le bloc (56₁) d'interface RF, stocker le nombre d'octets à transférer vers ou en provenance du bloc (56₁) d'interface RF ; et
- dans la direction de réception, faire en sorte que des données commencent à circuler sur le trajet (56) de données de traitement de paquets.

24. Procédé de construction et de déconstruction de paquets de données suivant la revendication 22 ou 23, dans lequel le procédé comprend également l'étape consistant à :
- à l'aide d'un registre de configuration de type FEC contenu dans le bloc (56₂) FEC, mémoriser le type de codage de correction d'erreurs.

25. Procédé de construction et de déconstruction de paquets de données suivant l'une quelconque des revendications 22 - 24, dans lequel le procédé comprend également les étapes consistant à :
- à l'aide d'un registre de configuration de type CRC contenu dans le bloc (56₃) CRC, mémoriser le type de code CRC ;
- à l'aide d'un registre de configuration de réinitialisation de code CRC contenu dans le bloc (56₃) CRC, réinitialiser le calcul CRC au début du champ de paquet s'il est réglé à "vrai" ; et
- à l'aide d'un registre de configuration d'extrémité CRC contenu dans le bloc (56₃) CRC, lorsqu'il est réglé à "vrai", indiquer qu'il s'agit du dernier champ sur lequel le CRC est calculé, et que le total de contrôle doit être annexé au/retiré du champ.

26. Procédé de construction et de déconstruction de paquets de données suivant l'une quelconque des revendications 22 - 25, dans lequel le procédé comprend également les étapes consistant à :
- à l'aide d'un registre de configuration de Compte d'Octets contenu dans le bloc (56ₙ) de point d'extrémité DMA, stocker le nombre d'octets devant être transférés vers/depuis le moyen (60) à mémoire ; et
- dans la direction de transmission, faire en sorte que des données commencent à circuler sur le trajet (56) de données de traitement de paquets.

27. Produit (102₁, ..., 102ₙ) à base, de programme informatique pour la construction et la déconstruction de paquets de données, le produit (102₁, ..., 102ₙ) à base de programme informatique pouvant être directement chargé dans une mémoire interne d'un ordinateur (100₁, .... 100ₙ) numérique, comprenant des parties de code logiciel pour exécuter toutes les étapes du procédé de construction et de déconstruction de paquets de données selon l'une quelconque des revendications 15 à 26 lorsque le produit (102₁, ..., 102ₙ) s'exécute sur l'ordinateur (100₁, ... , 100ₙ).
